# EUROPEAN PATENT SPECIFICATION

(11) **EP 1 667 411 B1**
(45) Date of publication and mention of the grant of the patent: **21.11.2018**
(21) Application number: 04300832.5
(22) Date of filing: 01.12.2004
(51) Int. Cl.: H04M 1/725, H04L 12/28

(54) **System and method for content playback**
System und Verfahren zur Datenwiedergabe
Système et procédé pour la reproduction de données

(43) Date of publication of application: 07.06.2006
(73) Proprietor: Thomson Licensing, 92130 Issy-les-Moulineaux (FR)
(72) Inventor: Tsang, Wing Hon Flat 9c, Hong Shing Court, Hong Kong (CN); Lui, Tsz Shing House 15, 1st Street, Section D, Hong Kong (CN); Chiu, Ronald B3, 17Fl. Bo Fung Garden, Hong Kong (CN)
(74) Representative: Huchet, Anne

(56) References cited:
- EP-A- 1 091 543
- EP-A- 1 276 295
- EP-A- 1 276 296
- WO-A-02/089441
- US-A- 4 392 022
- US-A- 5 726 645
- US-A1- 2002 102 998

## Description

### FIELD OF THE INVENTION

The present invention relates to a system and a method for content playback.

### BACKGROUND OF THE INVENTION

Portable devices are known to facilitate our entertainments during movements. It is quotidian to see people enjoy their music/radio/video/communication on their way through their portable devices, such as AM/FM radio, cassette player, CD player, MP3, portable video player, laptop, mobile phone.

On the other hand, it is even more ordinary to see various home devices to provide us with music/radio/video/communication in our homes, such as home stereo, home theatre, shelf acoustics, home telephone set, or other home appliance.

If we would like to continue enjoying the music/radio/video/communication when we arrive home, then we have to find the remote control for the home device, switch off the portable device and turn on the home device, and even worse we have to search for the content we enjoyed through the portable device just now. Accordingly, there exists a need for relay the content from the portable device to the home device, or vice versa, by simple and convenient operation.

### SUMMARY OF THE INVENTION

According to the present invention, it is provided a portable device according to claim 1, a home device according to claim 6, a system according to claim 10 and a method for content playback according to claim 13. Further embodiments are defined in the dependent claims. initiating the content relay.

Other objects, advantages and novel features of the invention will become more apparent from the following detailed description when taken in conjunction with the accompanying drawings.

### BRIEF DESCRIPTION OF THE DRAWINGS

Fig. 1 is a block diagram showing one embodiment of the portable device according to the present invention;
Fig. 2 is a block diagram showing a more preferred embodiment of the portable device according to the present invention;
Fig. 3 is a block diagram showing one embodiment of the home device according to the present invention;
Fig. 4 is a block diagram showing a more preferred embodiment of the system for content relay according to the present invention;
Fig. 5 is a flow chart showing one embodiment of the method for content relay according to the present invention;
Fig. 6 is a flow chart showing a more preferred embodiment of the method for content relay according to the present invention;
Fig. 7 is a flow chart showing a further more preferred embodiment of the method for content relay according to the present invention;
Fig. 8 is a flow chart showing a still further more preferred embodiment of the method for content relay according to the present invention; and
Fig. 9 is a flow chart showing the details of the content management in the method for content relay according to the present invention.

### DETAILED DESCRIPTION OF THE PREFERRED EMBODIMENT

The technical features of the present invention will be described further with reference to the embodiments. The embodiments are only preferable examples without limiting to the present invention. It will be well understood by the following detail description in conjunction with the accompanying drawings.

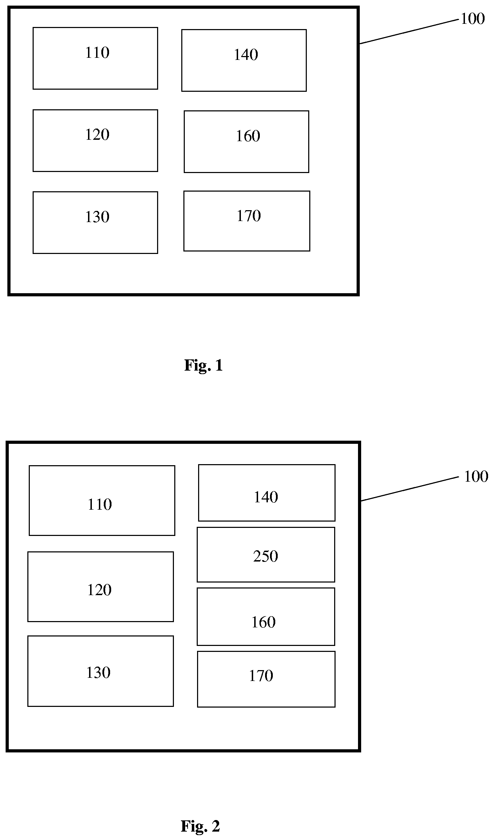

The Fig. 1 illustrates one embodiment of the portable device according to the present invention. As shown in the Fig. 1, the portable device **100** includes a display unit **120** for displaying the content or the control operation of the portable device, a content source unit **140** for sourcing the content for the portable device, a output unit **170** for outputting audio/video on the portable device, a control unit **130** for controlling the portable device based on control codes, a wireless communication unit **110** for communicating between the portable device and a home device, a relay control unit **160** for relaying the content when the relay control unit is pressed. TSAL4400 of Vishay Semiconductor GmbH (Germany) could be used here as IR transmitter, also the wireless communication unit. TSOP312 of the same company could be used here as IR receiver, of course the wireless communication unit at the same time. As for the control code used by the control unit, it is favourable to use the Codes in Document Number 80071 (Rev. A2, Aug. 27, 2003) of Vishay Semiconductors. As a substitute, the infra-red (IR) remote-control format, protocol and command-set employed in RCA, GE, ProScan and other brands of consumer-electronics equipment manufactured and marketed by Thomson Consumer Electronics, Americas is also an advantageous choice, It could be understood by the skilled in the art, there could be various choices for the applicable control codes. As an exemplary embodiment, the portable device is described as portable music device, and the content is audio data. However, this invention is not limited to portable music devices but can be applied to many other types of portable devices. Every music device will commonly stay on its volume level, input source (Radio, CD, AUX, etc.), content (last song on CD, channel, AUX, etc.), display and audio setting when it is turned off into standby mode. Therefore, user can easily continue his last listening by simply turning on the music device instead of a default mode and fixed playback every time when the music device is turned on. When one relay button on the Portable Device is pressed, the music is relayed by just on and off respectively devices via the built-in remote control and the followings are the combinational condition and the corresponding response:
1. The Home Device and the Portable Device are off. When the relay button is pressed, the remote control sends the standby code to turn off the Home Device (it will stay no change for this received code) and then turn on the Portable Device.
2. The Home Device is on and the Portable Device is off. When the relay button is pressed, the remote control sends the standby code to turn off the Home Device and then turn on the Portable Device.
3. The Home Device is off and the Portable Device is on, when the relay button is pressed, the remote control sends the wake up code to turn on the Home Device and then turn off the Portable Device.
4. The Home Device and the Portable Device are on. When the relay button is pressed, the remote control sends the wake up code to turn on the Home Device (it will stay no change for this received code) and then turn off the Portable Device.

The Fig. 2 is a block diagram showing a more preferred embodiment of the portable device according to the present invention. As shown in the Fig. 2, the portable device further includes a content management unit **250** for managing the content based on the management information in the portable device, and other components have the same functions corresponding to those in Fig. 1. With the structure shown in Fig. 2, the same concept will be extended to relay with same song or same radio channel (content) on the Home Device using additional information sent out from the Portable Device. If this music relay based on the content is required in bi-directional interaction, then a remote control sent out the additional information from the Home Device to the Portable Device must be included. Suppose the Home Device is a jukebox to hold all the song that can be downloaded into the Portable Device. Such Home Device is the super domain to provide the content from inside and outside (internet or radio). Although the Portable Device only holds the sub-set content of the Home Device so relay in the Portable Device may be a problem to find the same content. In such a case, the portable can relay in staying its last content when it is turned off to standby.

In order to implement the same content relay, the content management unit may comprise a storage medium to pre-store the content. As known by the skilled in the art, there exist countless types of such storage media. In the present invention, it is preferable to use Hard Disk Drives (HDD) as storage media. Moreover, selections for implementing the content management unit could be various kinds of databases stored in HDD, especially the retrieval method for a Multimedia Database (EP 1327988 A1) stored in HDD.

Alternatively, the wireless communication unit **110** could be any one of IR transmitter, IR transmitter/receiver, bluetooth transmitter, bluetooth transmitter/receiver, WiFi transmitter, or WiFi transmitter/receiver. The content source unit **140** could be any one of a storage medium, a radio tuner, or a connection to download contents.

The portable device **100** could be a AM/FM radio, a cassette player, a CD player, a MP3, a portable video player, a laptop, a mobile phone, and their arbitrary combinations.

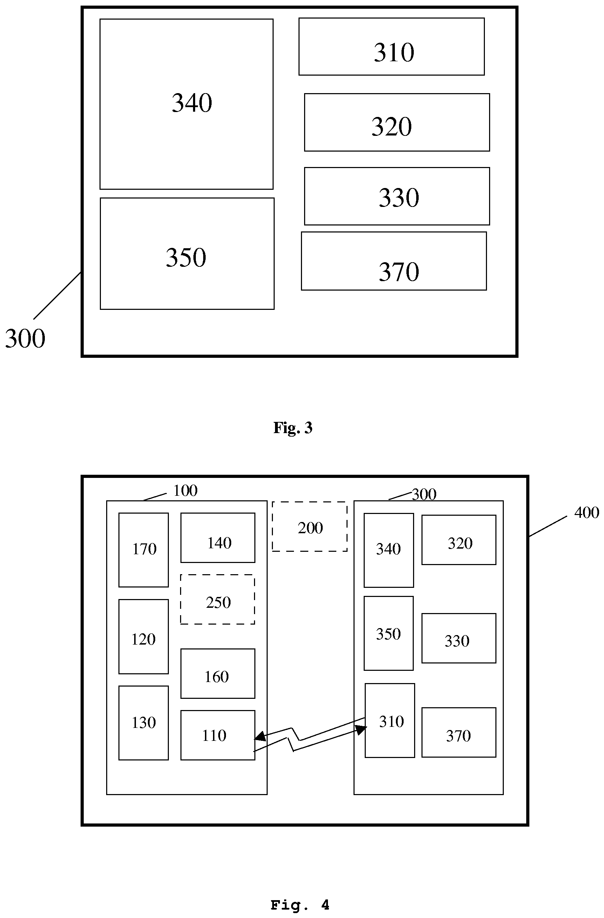

Fig. 3 is a block diagram showing one embodiment of the home device according to the present invention. Referring to the Fig. 3, the home device **300** for content relay includes a display unit **320** for displaying the content or the control operation of the home device, a content source unit **340** for sourcing the content for the home device, a output unit **370** for outputting audio/video on the home device, a control unit **330** for controlling the home device based on control codes, a wireless communication unit **310** for communicating between the home device and a portable device, and a content management unit **350** for managing the content based on the management information in the home device. The content management could be implemented by a downloaded program for PDA to control all the home appliances. The user can download the appliance IR remote control code if it is available. Afterwards, the application program can allow the user to interactively design their graphical user interface (button, etc.) and custom the remote control code associating with the user interface. Therefore, among IR remote codes of different home appliances, it is possible to custom any possible application for the user's convenience. The proposed approach is extended to the control with content index to enhance customer's satisfaction.

More preferably, the wireless communication unit **310** of the home device could be any one of IR receiver, IR transmitter/receiver, bluetooth receiver, bluetooth transmitter/receiver, WiFi receiver, or WiFi transmitter/receiver. The content source unit **340** of the home device could be any one of an AUX, a CD drive, a DVD drive, a Hard Disk Drive (HDD), a radio tuner, a High-Definition Multimedia Interface (HDMI), or a connection to download contents. The home device **300** could be any one of a home stereo, a home theatre, a shelf acoustics, a home telephone set, an air conditioner, a TV set, a washing machine, or other home appliances.

Fig. 4 is a block diagram showing a more preferred embodiment of the system for content relay according to the present invention. Referring to Fig. 4, a system **400** for content relay, includes a portable device **100** and a home device **300,** the portable device having a first display unit **120** for displaying the content or the control operation of the portable device, a first content source unit **140** for sourcing the content for the portable device, a first output unit **170** for outputting audio/video on the portable device, a first control unit **130** for controlling the portable device based on control codes, a first wireless communication unit **110** for communicating between the portable device and the home device, a relay control unit **160** for relaying the content when the relay control unit is pressed; the home device includes a second display unit **320** for displaying the content or the control operation of the home device, a second content source unit **340** for sourcing the content for the home device, a second output unit **370** for outputting audio/video on the home device, a second control unit **330** for controlling the home device based on control codes, a second wireless communication unit **310** for communicating between the home device and the portable device, and a first content management unit **350** for managing the content based on the management information in the home device.

More preferably, the portable device **100** in the system **400** may further include a second content management unit **250** for managing the content based on the management information in the portable device. The system **400** for content relay further includes an external media equipment **200** for relaying the content with the portable device. The management information of the system **400** could be any one of an URL, a path, a file name in a storage medium, a disk number, a track number, a chapter number, a media type, an ASX, and a HDMI. The home device contains a lot of difference content sources including AUX, Compact Disc, DVD, Hard Disk Drive, Radio Tuner, Network Connection, HDMI, etc. The AUX is a traditional connection to the outside analog source output of the external A/V player, recorder, etc. Another analog input source is the Radio with digital tuning to easily and directly set up the channel arbitrarily. The shopping content is mainly published in CD and DVD as standard digital inputs in the Home Device. The High-Definition Multi-media Interface (HDMI) is the digital connection to transmit the digital video and multi-channel digital audio in a single cable to provide clear video and audio with a simple interconnection. It can be built as switch center of HDMI to select from different HDMI inputs to your monitor HDMI output like the AUX function. The Hard Disk Drive is to store the archive of the media content inside the Home Device. Owing to its large capability, Content Management should be implemented in the Center to easily retrieve and tidy store the archives. Another similar type of the HDD is Network Connection to keep the archive in the outside of the Home Device as well as it can be used to download the archive into the portable player. The user can control the operation of the Home Device by inputting either from the Infra Red controller or the key in the front panel of the home device. In order to implement the relay function, the Portable Device has an Infra Red transmitter as a remote control function, which can be programmed the carrier frequency, digital modulation, and the control code. As for the content sources, it mainly comes from built-in digital tuning Radio and the archive that is downloaded from the Home Device and Personal Computer through the Network Connectivity. The Content Management is optional and dependent on how large the built-in storage. The user can operate the Portable Device through the keys and observe the status/information from the display. Finally, the Portable Device is always the master of the relay function to initialize and send out the request to the Home Device.

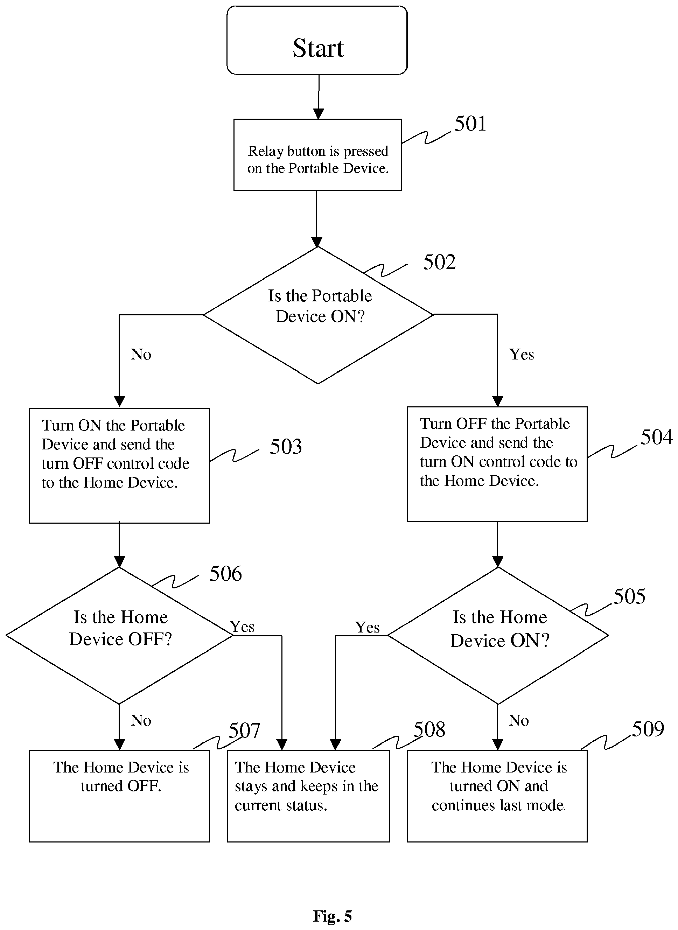

Fig. 5 is a flow chart showing one embodiment of the method for content relay according to the present invention. Refer to the Fig. 5, this is the basic operation of the relay function that turn on the Home Device and off the Portable Device when the relay button is pressed, and vice versa. It is also a default operation when the specified content cannot match in the either sides, this default operation will be substituted by the consequent actions. Relay button is pressed on the Portable Device at step **501;** detecting whether the Portable Device is ON at step **502;** if NO, turn ON the Portable Device and send the turn OFF control code to the Home Device at step **503,** detecting whether the Home Device is OFF at step **506;** if NO, The Home Device is turned OFF at step **507;** if Yes, The Home Device stays and keeps in the current status at step **508;** if the result of step **502** is Yes, turn OFF the Portable Device and send the turn ON control code to the Home Device at step **504;** detecting whether the Home Device is ON at step **505;** if NO, The Home Device is turned ON and continues last mode at step **509;** if Yes, The Home Device stays and keeps in the current status at step **508.**

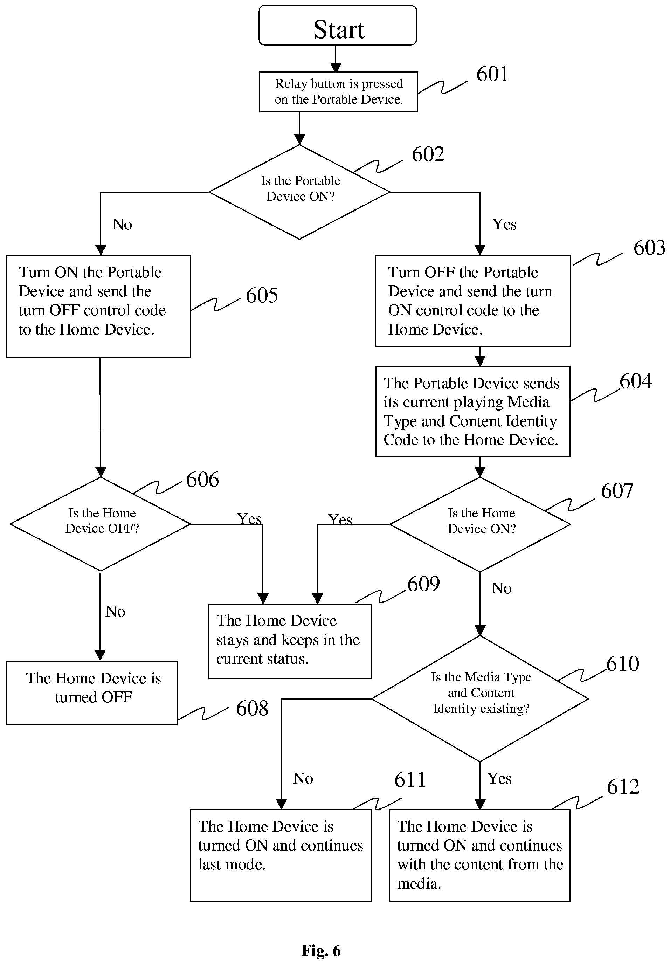

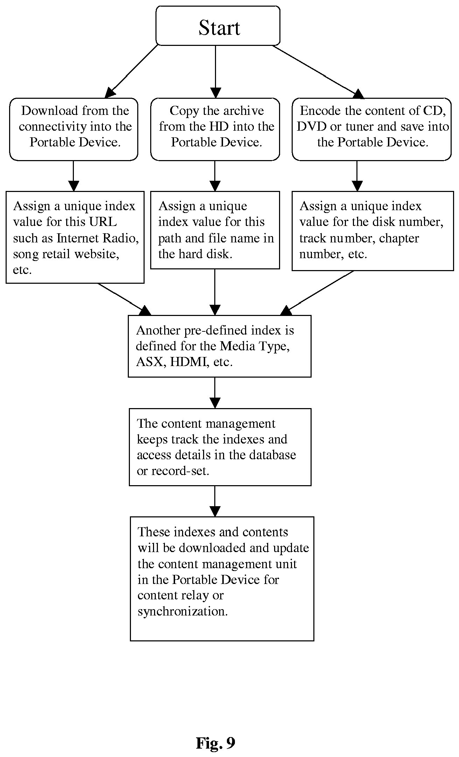

Fig. 6 is a flow chart showing a more preferred embodiment of the method for content relay according to the present invention. Referring to the Fig. 6, this relay is specified to continue the same content from the Portable Device to the Home Device. When the relay button is pressed, additional information such as media type (archive, radio, CD/DVD, network) and the content identity (file name, channel frequency, track number/chapter, network resource path) are sent out together with the control code (playback). As shown in the Fig. 6, the differences between Fig. 6 and the Fig. 5 are the steps **604, 610, 611** and **612.** The Portable Device sends its current playing Media Type and Content Identity Code to the Home Device at step **604;** detecting whether the Media Type and Content Identity is existing at step **610;** if NO, The Home Device is turned ON and continues last mode at step **611;** if Yes, The Home Device is turned ON and continues with the content from the media at step **612.** As for the media type, the content identity and the synchronization, please refer to the Figure 9 for the details.

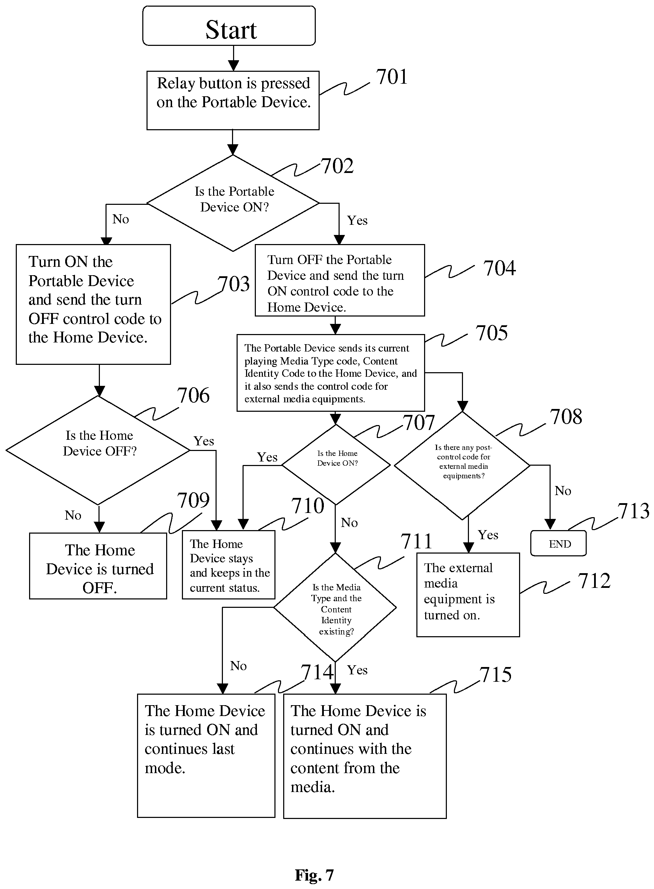

Fig. 7 is a flow chart showing a further more preferred embodiment of the method for content relay according to the present invention. This relay is same as in the Fig. 6 but it also includes the HDMI and AUX content types. Additional control code will be sent out to turn ON/OFF the external A/V equipments. These external content information must be specially handled to quickly relay same media type so the Content Management (refer to Figure 5) in the Home Device must tackle these cases (if the content is downloaded into the Portable Device from the Home Device) to encode this corresponding content relay control information that also download into the Portable Device. Such complex control for external equipments could be solved with the help of Personal Computer to define and prepare this control definition into a file and then download into the Portable Device through the network connection. The Portable Device based on the pre-defined format of the control definition interprets and executes the corresponding action. Understandably, if the external media equipment is limited to the known codes of a same brand then no need involve the computer in the flow. As shown in the Fig. 7, the differences between Fig. 7 and the Fig. 6 are the steps **705, 708, 712** and **713.** The Portable Device sends its current playing Media Type code and Content Identity Code to the Home Device and it also sends the control code for external media equipments at step **705;** detecting whether there is any post-control code for external media equipments at step **708;** if NO, then the flow ends at step **713;** if Yes, The external media equipment is turned ON at step **712.**

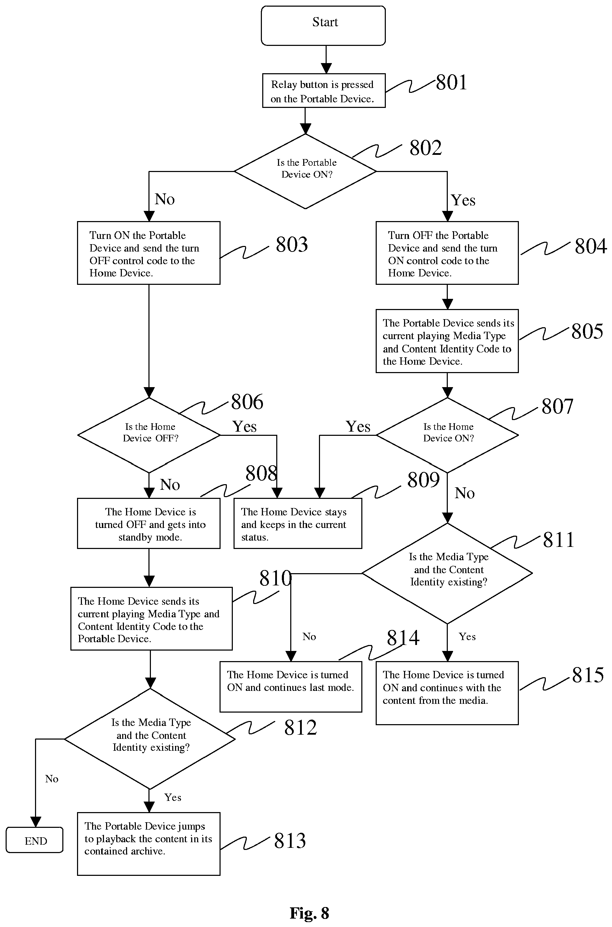

Fig. 8 is a flow chart showing a still further more preferred embodiment of the method for content relay according to the present invention. This relay will further extend and add the control code and content identity information from the Home Device to the Portable Device. Therefore, additional hardware of the IR transmitter in the Home Device and IR receiver in the Portable Device must be installed. When the relay button is pressed to turn on the Portable Device, then the Home Device received the request from Portable Device and it will send out the control code and identity information of the current content to the Portable Device and then turn off itself. As shown in the Fig. 8, the differences between Fig. 6 and the Fig. 8 are the steps **808, 810, 812** and **813.** The Home Device is turned OFF and gets into standby mode at step **808;** the Home Device sends its current playing Media Type and Content Identity Code to the Portable Device at step **810;** detecting whether the Media Type and Content Identity is existing at step **812;** if NO, the flow ends accordingly; if Yes, the Portable Device jumps to playback the content in its contained archive at step **813.** As for the media type, the content identity and the synchronization, please refer to the Figure 9 for the details.

Referring to the Fig. 9 for the details of the content management in the method for content relay according to the present invention, the flow branches off into three sub-flows. As understood by the skilled in the art, there could be other possibilities besides the exampled three: download from the connection into the portable device, then assign a unique index value for this URL such as Internet Radio, song retail website, etc.; copy the archive from the HDD into the portable device, then assign a unique index value for this path and file name in the HDD; and encode the content of CD, DVD or radio tuner and save into the portable device, then assign a unique index value for the disk number, track number, chapter number, etc. Afterwards, the three branches merge into one: another pre-defined index is defined for the Media Type, ASX, HDMI, etc., then the content management keeps track the indexes and access details in the database or record-set, at last these indexes and contents will be downloaded and update the content management unit in the Portable Device for content relay or synchronization.

Whilst there has been described in the forgoing description preferred embodiments and aspects of the present invention, it will be understood by those skilled in the art that many variations in details of design or construction may be made without departing from the present invention as defined by the claims.

## Claims

1. A portable device (100) for content playback, including a display unit (120) for displaying the contents or the control operation of the portable device, an output unit (170) for outputting audio/video on the portable device, **characterized in that** the portable device further includes a control unit (160) for initiating content playback on a home device for content that is played back on the portable device or on the portable device for content that is played back on the home device, a content source unit (140) for sourcing contents for the portable device, a control unit (130) for controlling the portable device to perform the content playback based on control codes, and a wireless communication unit (110) for communicating content information comprising media type and content identity between the portable device and the home device wherein the content information is used by the portable device or the home device to continue playback of the content that is currently played back on the other device, respectively.

2. The portable device (100) according to claim 1, **characterized in that** the wireless communication unit (110) could be any one of IR transmitter, IR transmitter/receiver, bluetooth transmitter, bluetooth transmitter/receiver, WiFi transmitter, or WiFi transmitter/receiver.

3. The portable device (100) according to claim 1, **characterized in that** the content source unit (140) could be any one of a storage medium, a tuner, or a connection to download contents.

4. The portable device (100) according to claim 1, further includes a content management unit (250) for managing the content based on the management information in the portable device.

5. The portable device (100) according to any one of claims 1 to 4 is selected from a group consisting of: a AM/FM radio, a cassette player, a CD player, a MP3, a portable video player, a laptop, a mobile phone, and their arbitrary combinations.

6. A home device (300) for content playback, including a display unit (320) for displaying the contents or the control operation of the home device, an output unit (370) for outputting audio/video on the home device, **characterized in that** the home device further includes a content source unit (340) for sourcing the contents for the home device, a wireless communication unit (310) for communicating content information comprising media type and content identity between the home device and a portable device, wherein the content information is used by the portable device or the home device to continue the content that is currently played on the other device, respectively, a control unit (330) for controlling the home device based on control codes, and a content management unit (350) for managing the contents based on the management information in the home device.

7. The home device (300) according to claim 6, **characterized in that** the wireless communication unit (310) could be any one of IR receiver, IR transmitter/receiver, bluetooth receiver, bluetooth transmitter/receiver, WiFi receiver, or WiFi transmitter/receiver.

8. The home device (300) according to claim 6, **characterized in that** the content source unit (340) could be any one of an AUX, a CD drive, a DVD drive, a Hard Disk Drive (HDD), a tuner, a High-Definition Multimedia Interface (HDMI), or a connection to download contents.

9. The home device (300) according to any one of claims 6 to 8 is selected from a group consisting of: a home stereo, a home theatre, a shelf acoustics, a home telephone set, an air conditioner, a TV set, a washing machine.

10. A system (400) for content playback, including a portable device (100) according to one of the claims 1 to 5 and a home device (300) according to one of the claims 6 to 9.

11. The system (400) for content playback according to claim 10, further includes an external media equipment (200) for relaying the contents with the portable device.

12. The system (400) for content playback according to claim 10, **characterized in that** the management information could be any one of an URL, a path, a file name in a storage medium, a disk number, a track number, a chapter number, a media type, an ASX, or a HDMI.

13. A method for content playback on a portable device (100) according to one of the claims 1 to 5 and a home device (300), according to one of the claims 6 to 9,
wherein the method comprises:
a) using the control unit (160) in the portable device (100) to initiate the content playback on a home device for content that is played back on the portable device or on the portable device for content that is reproduced on the home device;
b) detecting the ON/OFF status of the portable device and the ON/OFF status of the home device;
c) if the detected status of the portable device is ON and the detected status of the home device is OFF, then sending a control code for turning the home device on, continuing on the home device playback of the content that is currently played back on the portable device and turning the portable device off.

14. The method according to claim 13 may further comprise, at the side of the home device:
if the detected status of the portable device is OFF and the detected status of the home device is OFF, turning the portable device on.

15. The method according to claim 13 may further comprise:
if the detected status of the portable device is ON and the detected status of the home device is ON, turning the portable device off.

16. The method according to claim 13 may further comprise:
if the detected status of the portable device is OFF and the detected status of the home device is ON, turning the portable device on, continuing on the portable device the playback of the content that is currently played back on the home device and turning the home device off.

## Patentansprüche

1. Tragbare Vorrichtung (100) zur Wiedergabe von Inhalten, mit einer Anzeigeeinheit (120) zur Anzeige der Inhalte oder des Steuerungsbetriebs der tragbaren Vorrichtung, einer Ausgabeeinheit (170) zur Ausgabe von Audio/Video auf der tragbaren Vorrichtung, **dadurch gekennzeichnet, dass** die tragbare Vorrichtung ferner eine Steuereinheit (160) zur Auslösung der Wiedergabe von Inhalten auf einer Heimvorrichtung für Inhalte, die auf der tragbaren Vorrichtung oder auf der tragbaren Vorrichtung für Inhalte, die auf der Heimvorrichtung wiedergegeben werden, ist, eine Inhaltsquelleneinheit (140) zum Beschaffen von Inhalten für die tragbare Vorrichtung, eine Steuereinheit (130) zum Steuern der tragbaren Vorrichtung, um die Wiedergabe von Inhalten basierend auf Steuercodes durchzuführen, und eine drahtlose Kommunikationseinheit (110) zum Kommunizieren der Inhaltsinformationen, die den Medientyp und die Inhaltsidentität zwischen der tragbaren Vorrichtung und der Heimvorrichtung umfassen, wobei die Inhaltsinformationen von der tragbaren Vorrichtung oder der Heimvorrichtung verwendet werden, um die Wiedergabe des Inhalts, der aktuell jeweils auf der anderen Vorrichtung wiedergegeben wird, fortzusetzen, umfasst.

2. Tragbare Vorrichtung (100) nach Anspruch 1, **dadurch gekennzeichnet, dass** die drahtlose Kommunikationseinheit (110) eine beliebige aus einem IR-Sender, IR-Sender/- Empfänger, Bluetooth-Sender, Bluetooth-Sender/-Empfänger, WiFi-Sender oder WiFi-Sender/-Empfänger sein kann.

3. Tragbare Vorrichtung (100) nach Anspruch 1, **dadurch gekennzeichnet, dass** die Inhaltsquelleneinheit (140) ein beliebiges Speichermedium, ein Tuner oder eine Verbindung zum Herunterladen von Inhalten sein kann.

4. Tragbare Vorrichtung (100) nach Anspruch 1, die ferner eine Inhaltsverwaltungseinheit (250) zur Verwaltung der auf den Verwaltungsinformationen in der tragbaren Vorrichtung basierenden Inhalte umfasst.

5. Tragbare Vorrichtung (100) nach einem der Ansprüche 1 bis 4, die ausgewählt ist aus einer Gruppe bestehend aus: einem AM/FM-Radio, einem Kassettenspieler, einem CD-Player, einem MP3-Player, einem tragbaren Videoplayer, einem Laptop, einem Mobiltelefon und deren beliebigen Kombinationen.

6. Heimvorrichtung (300) zur Wiedergabe von Inhalten, mit einer Anzeigeeinheit (320) zur Anzeige des Inhalts oder des Steuerungsbetriebs der Heimvorrichtung, einer Ausgabeeinheit (370) zur Ausgabe von Audio/Video auf der Heimvorrichtung, **dadurch gekennzeichnet, dass** die Heimvorrichtung ferner eine Inhaltsquelleneinheit (340) zum Beschaffen der Inhalte für die Heimvorrichtung, eine drahtlose Kommunikationseinheit (310) zum Kommunizieren von Inhaltsinformationen, die den Medientyp und die Inhaltsidentität zwischen der Heimvorrichtung und einer tragbaren Vorrichtung umfasst, wobei die Inhaltsinformationen von der tragbaren Vorrichtung oder der Heimvorrichtung verwendet werden, um den aktuell jeweils auf der anderen Vorrichtung wiedergegebenen Inhalt fortzusetzen, eine Steuereinheit (330) zum Steuern der Heimvorrichtung basierend auf Steuercodes und eine Inhaltsverwaltungseinheit (350) zum Verwalten des Inhalts basierend auf den Verwaltungsinformationen in der Heimvorrichtung umfasst.

7. Heimvorrichtung (300) nach Anspruch 6, **dadurch gekennzeichnet, dass** die drahtlose Kommunikationseinheit (310) eine beliebige aus einem IR-Sender, IR-Sender/- Empfänger, Bluetooth-Sender, Bluetooth-Sender/-Empfänger, WiFi-Sender oder WiFi-Sender/-Empfänger sein kann.

8. Heimvorrichtung (300) nach Anspruch 6, **dadurch gekennzeichnet, dass** die Inhaltsquelleneinheit (340) eine beliebige aus einem AUX-, einem CD-Laufwerk, einem DVD-Laufwerk, einem Festplattenlaufwerk (HDD), einem Tuner, einer High-Definition Multimedia Interface (HDMI) oder einer Verbindung zum Herunterladen von Inhalten sein kann.

9. Heimvorrichtung (300) nach einem der Ansprüche 6 bis 8, ausgewählt aus einer Gruppe bestehend aus: einer Heimstereoanlage, einem Heimkino, einer Regalakustik, einem Haustelefon, einer Klimaanlage, einem Fernseher, einer Waschmaschine.

10. System (400) zur Wiedergabe von Inhalten, umfassend eine tragbare Vorrichtung (100) nach einem der Ansprüche 1 bis 5 und eine Heimvorrichtung (300) nach einem der Ansprüche 6 bis 9.

11. System (400) für die Wiedergabe von Inhalten nach Anspruch 10 ferner umfassend eine externe Medienausrüstung (200) für die Weiterleitung der Inhalte an die tragbare Vorrichtung.

12. System (400) zur Wiedergabe von Inhalten nach Anspruch 10, **dadurch gekennzeichnet, dass** die Verwaltungsinformation eine beliebige URL, ein Pfad, ein Dateiname in einem Speichermedium, eine Plattennummer, eine Titelnummer, eine Kapitelnummer, ein Medientyp, ein ASX oder eine HDMI sein kann.

13. Verfahren zur Wiedergabe von Inhalten auf einer tragbaren Vorrichtung (100) nach einem der Ansprüche 1 bis 5 und einer Heimvorrichtung (300) nach einem der Ansprüche 6 bis 9, wobei das Verfahren Folgendes umfasst:
a) Verwendung der Steuereinheit (160) in der tragbaren Vorrichtung (100) zur Auslösung der Wiedergabe von Inhalten auf einer Heimvorrichtung für Inhalte, die auf der tragbaren Vorrichtung wiedergegeben werden, oder auf der tragbaren Vorrichtung für Inhalte, die auf der Heimvorrichtung wiedergegeben werden;
b) Erkennung des EIN/AUS-Zustands der tragbaren Vorrichtung und des EIN/AUS-Zustands der Heimvorrichtung;
c) wenn der erkannte Zustand der tragbaren Vorrichtung auf EIN und der erkannte Zustand der Heimvorrichtung auf AUS steht, dann Senden eines Steuercodes zum Einschalten der Heimvorrichtung, Fortsetzen der Wiedergabe des aktuell auf der tragbaren Vorrichtung wiedergegebenen Inhalts auf der Heimvorrichtung und Ausschalten der tragbaren Vorrichtung.

14. Das Verfahren nach Anspruch 13 kann ferner seitens der Heimvorrichtung Folgendes umfassen:
wenn der erkannte Zustand der tragbaren Vorrichtung auf AUS und der erkannte Zustand der Heimvorrichtung auf AUS steht, Einschalten der tragbaren Vorrichtung.

15. Das Verfahren nach Anspruch 13 kann ferner Folgendes umfassen:
wenn der erkannte Zustand der tragbaren Vorrichtung auf EIN und der erkannte Zustand der Heimvorrichtung auf EIN steht, Ausschalten der tragbaren Vorrichtung.

16. Das Verfahren nach Anspruch 13 kann ferner Folgendes umfassen:
wenn der erkannte Zustand der tragbaren Vorrichtung auf AUS und der erkannte Zustand der Heimvorrichtung auf EIN steht, Einschalten der tragbaren Vorrichtung, Fortsetzen der Wiedergabe des aktuell auf der Heimvorrichtung wiedergegebenen Inhalts auf der tragbaren Vorrichtung und Ausschalten der Heimvorrichtung.

## Revendications

1. Appareil portable (100) pour la lecture de contenu, comprenant une unité d'affichage (120) pour afficher le contenu ou l'opération de commande de l'appareil portable, une unité de sortie (170) pour la sortie audio/vidéo sur l'appareil portable, **caractérisé en ce que** l'appareil portable comprend en outre une unité de commande (160) pour lancer la lecture de contenu sur un appareil domestique pour le contenu lu sur l'appareil portable ou sur l'appareil portable pour le contenu lu sur l'appareil domestique, une unité de source de contenu (140) pour déterminer la source du contenu pour l'appareil portable, une unité de commande (130) pour commander l'appareil portable pour procéder à la lecture du contenu en fonction de codes de commande, et une unité de communication sans fil (110) pour communiquer des informations de contenu comprenant le type de données multimédias et l'identité du contenu entre l'appareil portable et l'appareil domestique, dans lequel les informations de contenu sont utilisées par l'appareil portable ou l'appareil domestique pour poursuivre la lecture du contenu en cours de lecture sur l'autre appareil, respectivement.

2. Appareil portable (100) selon la revendication 1, **caractérisé en ce que** l'unité de communication sans fil (110) peut être un émetteur IR, un émetteur/récepteur IR, un émetteur Bluetooth, un émetteur/récepteur Bluetooth, un émetteur Wi-Fi ou un émetteur/récepteur Wi-Fi.

3. Appareil portable (100) selon la revendication 1, **caractérisé en ce que** l'unité de source de contenu (140) peut être un support de stockage, un syntoniseur ou une connexion pour télécharger du contenu.

4. Appareil portable (100) selon la revendication 1, comprenant en outre une unité de gestion de contenu (250) pour gérer le contenu en fonction des informations de gestion dans l'appareil portable.

5. Appareil portable (100) selon l'une quelconque des revendications 1 à 4, sélectionné dans un groupe constitué des éléments suivants : radio AM/FM, lecteur de cassettes, lecteur de CD, MP3, lecteur vidéo portable, ordinateur portable, téléphone mobile et combinaisons arbitraires correspondantes.

6. Appareil domestique (300) pour la lecture de contenu, comprenant une unité d'affichage (320) pour afficher le contenu ou l'opération de commande de l'appareil domestique, une unité de sortie (370) pour la sortie audio/vidéo sur l'appareil domestique, **caractérisé en ce que** l'appareil domestique comprend en outre une unité de source de contenu (340) pour déterminer la source du contenu pour l'appareil domestique, une unité de communication sans fil (310) pour communiquer des informations de contenu comprenant le type de données multimédias et l'identité du contenu entre l'appareil domestique et un appareil portable, dans lequel les informations de contenu sont utilisées par l'appareil portable ou l'appareil domestique pour poursuivre le contenu en cours de lecture sur l'autre appareil, respectivement, une unité de commande (330) pour commander l'appareil domestique en fonction de codes de commande, et une unité de gestion de contenu (350) pour gérer le contenu en fonction des informations de gestion dans l'appareil domestique.

7. Appareil domestique (300) selon la revendication 6, **caractérisé en ce que** l'unité de communication sans fil (310) peut être un récepteur IR, un émetteur/récepteur IR, un récepteur Bluetooth, un émetteur/récepteur Bluetooth, un récepteur Wi-Fi ou un émetteur/récepteur Wi-Fi.

8. Appareil domestique (300) selon la revendication 6, **caractérisé en ce que** l'unité de source de contenu (340) peut être une unité auxiliaire, un lecteur de CD, un lecteur de DVD, un disque dur, un syntoniseur, une interface multimédia haute définition (HDMI) ou une connexion pour télécharger du contenu.

9. Appareil domestique (300) selon l'une quelconque des revendications 6 à 8 sélectionné dans un groupe comprenant les éléments suivants : chaîne stéréo, home cinéma, enceinte bibliothèque, appareil téléphonique, climatiseur, téléviseur ou machine à laver.

10. Système (400) pour la lecture de contenu, comprenant un appareil portable (100) selon l'une des revendications 1 à 5 et un appareil domestique (300) selon l'une des revendications 6 à 9.

11. Système (400) pour la lecture de contenu selon la revendication 10, comprenant en outre un équipement multimédia externe (200) pour relayer le contenu avec l'appareil portable.

12. Système (400) pour la lecture de contenu selon la revendication 10, **caractérisé en ce que** les informations de gestion peuvent être une URL, un chemin d'accès, un nom de fichier sur un support de stockage, un numéro de disque, un numéro de piste, un numéro de chapitre, un type de données multimédias, un ASX ou un HDMI.

13. Procédé pour la lecture de contenu sur un appareil portable (100) selon l'une des revendications 1 à 5 et un appareil domestique (300) selon l'une des revendications 6 à 9, dans lequel le procédé comprend :
a) l'utilisation de l'unité de commande (160) dans l'appareil portable (100) pour lancer la lecture de contenu sur un appareil domestique pour le contenu lu sur l'appareil portable ou sur l'appareil portable pour le contenu reproduit sur l'appareil domestique ;
b) la détection du statut MARCHE/ARRÊT de l'appareil portable et du statut MARCHE/ARRÊT de l'appareil domestique ;
c) si le statut détecté de l'appareil portable est MARCHE et si le statut détecté de l'appareil domestique est ARRÊT, l'envoi d'un code de commande pour mettre l'appareil domestique sous tension, la poursuite sur l'appareil domestique de la lecture du contenu en cours de lecture sur l'appareil portable et la mise hors tension de l'appareil portable.

14. Procédé selon la revendication 13, pouvant comprendre en outre au niveau de l'appareil domestique :
si le statut détecté de l'appareil portable est ARRÊT et si le statut détecté de l'appareil domestique est ARRÊT, la mise sous tension de l'appareil portable.

15. Procédé selon la revendication 13, pouvant comprendre en outre :
si le statut détecté de l'appareil portable est MARCHE et si le statut détecté de l'appareil domestique est MARCHE, la mise hors tension de l'appareil portable.

16. Procédé selon la revendication 13, pouvant comprendre en outre :
si le statut détecté de l'appareil portable est ARRÊT et si le statut détecté de l'appareil domestique est MARCHE, la mise sous tension de l'appareil portable, la poursuite sur l'appareil portable de la lecture du contenu en cours de lecture sur l'appareil domestique et la mise hors tension de l'appareil domestique.
